# EUROPEAN PATENT APPLICATION

(11) **EP 2 355 020 A1**
(43) Date of publication of application: **10.08.2011**
(21) Application number: 10153287.7
(22) Date of filing: 11.02.2010
(51) Int. Cl.: G06Q 10/00

(54) **Providing a prompt for entry of information at a later time**

(30) Priority: 22.01.2010 US 692279
(71) Applicant: RESEARCH IN MOTION LIMITED, Waterloo, Ontario N2L 3W8 (CA)
(72) Inventor: Orr, Kevin, Waterloo Ontario N2L 3W8 (CA); Godfrey, James, Waterloo Ontario N2L 5R9 (CA); Owen, Russell Norman, Waterloo Ontario N2L 5Z5 (CA); Fyke, Steven, Waterloo Ontario N2L 3W8 (CA); Klassen, Gerhard Dietrich, Waterloo Ontario N2L 5Z5 (CA)
(74) Representative: Roberts, Gwilym Vaughan

(57) **Abstract**

A method and apparatus are provided to prompt a user of a portable electronic device in such a way to allow the user to enter information later. In response to receiving a user input that indicates a request to enter information at a later time, and upon occurrence of a trigger at the later time, the portable electronic device presents a prompt configured to facilitate entry of the information. In one embodiment the user input is specific to a type of trigger or to a type of prompt needed at the later time. Furthermore, the portable electronic device may prepare a contextual cue in response to receiving the user input, and present a portion of the contextual cue at the later time to facilitate remembrance of the information that the user wished to enter.

## Description

### FIELD OF TECHNOLOGY

The present disclosure relates generally to reminders in a portable electronic device, and in particular to a prompt configured to facilitate entry of information at a later time.

### BACKGROUND

Most portable electronic devices (such as cellular telephones, smart telephones, portable computers, portable personal digital assistants, and portable electronic gaming devices) provide storage for information which may be entered by a user of the portable electronic device. For example portable electronic devices may include memory for storing Personal Information Management, PIM, records such as contact PIM records, calendar PIM records, task PIM records, memo PIM records, and other information which the user of the portable electronic device wishes to maintain in the portable electronic device.

A portable electronic device may provide several ways to enter information. For example, the portable electronic device may include a keyboard input, a numeric input, a touch-sensitive input, a camera, a microphone, buttons, or other various types of inputs known to a person of skill in the relevant art. There are several techniques for reducing the amount of time needed to enter information in a portable electronic device. For example, a technique may include transmitting a specifically crafted message to a server that parses the message to generate an expanded information record, such as a PIM record. Another technique may allow for entry of short keywords or abbreviations that are translated to lengthier information items. In another technique, a portable electronic device may utilize a speech-to-text conversion to allow a user to speak information into the portable electronic device, allowing the spoken information to be converted into a textual representation of the spoken words.

Although techniques for reducing the amount of time needed to enter information are useful, a user of a portable electronic device may not have sufficient time to enter information. For example, the user may be aware that he or she lacks the amount of time needed to enter the information. In view of the foregoing, a new method and apparatus for prompting the user in such a way to allow the user to enter the information at an opportune time would be useful.

### BRIEF DESCRIPTION OF THE DRAWINGS

The disclosure refers to the following figures, in which like numerals describe substantially similar components throughout the several views.

Figure 1 is a diagram illustrating an example scenario in which the present disclosure might be useful.

Figure 2 is a diagram illustrating an example prompt configured to facilitate entry of information based on the example scenario.

Figure 3 is a flowchart illustrating an example method of presenting a prompt in accordance with an embodiment described in the present disclosure.

Figure 4 is a flowchart illustrating an example method of presenting a prompt along with at least a portion of a contextual cue.

Figure 5 is a flowchart illustrating an example method involving a continuously updated buffer for contextual information.

Figure 6 illustrates an example wireless communications system including an embodiment of a portable electronic device in accordance with at least one of the embodiments of the present disclosure.

Figure 7 is a diagram illustrating a processor and related components suitable for implementing at least one of the embodiments described in the present disclosure.

### DETAILED DESCRIPTION

The present disclosure provides a prompt configured to facilitate entry of information at a later time as a result of a user input that indicates a request to enter the information later. In one embodiment, the portable electronic device receives a user input that indicates a request to enter information at a later time, and upon occurrence of a trigger at the later time, the portable electronic device presents a prompt configured to facilitate entry of the information. The user input may indicate: a temporary lack of time to enter the information; that entry of the information involves interaction with an input portion of the portable electronic device for more than a predetermined period of time; or any user input which may be associated with the prompt in accordance with this disclosure.

In one embodiment, the trigger at the later time may occur: at a predetermined time after receiving the user input; based on a change in movement of the portable electronic device; based on usage of a PIM application on the portable electronic device; or may be any trigger adequate to initiate a process in accordance with this disclosure. In further embodiments, the portable electronic device may, in response to receiving the user input, prepare a contextual cue, and present a portion of the contextual cue with the prompt configured to facilitate entry of the information. The contextual cue may facilitate remembrance of the information to be entered.

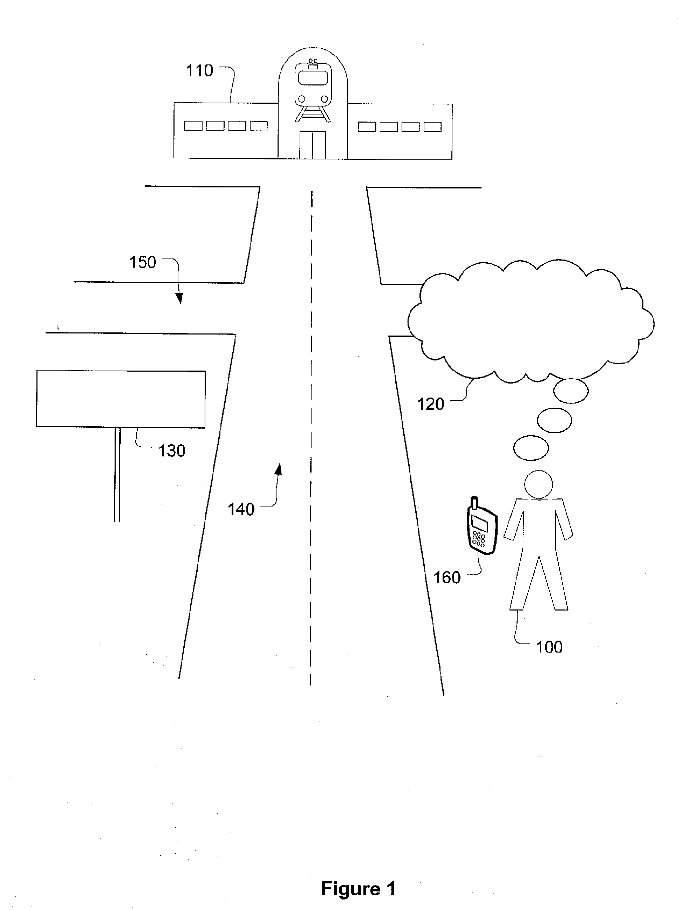

**Figure 1** is an illustrative example describing an example scenario where this disclosure may be employed. In Figure 1, a user 100 of a portable electronic device 160 may be walking to a train station 110. In the example scenario, the user 100 may have a thought about some information, represented by thought bubble 120, which the user 100 would like to enter into the portable electronic device 160 at a later time. As a non-limiting example, the user 100 may be engaged in a phone conversation and he would like to enter the phone number of the caller in a PIM record. When the phone call ends, the user intends to create a new contact PIM record to store the phone number for a new acquaintance. In another example, the phone conversation may have prompted one or more action items the user wishes to store as task PIM records, calendar PIM records, or memo PIM records. In another alternative, the user may have remembered, during the phone conversation, that he or she needs to perform a task such as buy milk at the store on his or her way home, or email a document. In these and other examples, the user 100 has a thought about some information 120 that the user 100 wishes to enter into the portable electronic device 160, but the entry of the information requires further interaction with the portable electronic device 160.

Although the user 100 desires to enter information into the portable electronic device 160, the user 100 does not have time while walking to the train station 110 to enter the information into the portable electronic device 160. With limited interaction with the portable electronic device 160, the user 100 performs a specific user input on the portable electronic device 160 which indicates that the user 100 requests to enter information at a later time. The portable electronic device 160 receives the user input and, in some instances, prepares a contextual cue based on a recently-performed previous activity conducted on the portable electronic device 160 prior to receiving the user input. For example, the contextual cue might include the phone number associated with the previous call, contact info, date, time, and location of the user 100 at the time of the user input. In Figure 1, the portable electronic device 160 may include the location in terms of an intersection of street 140 and cross-street 150. Alternatively, the portable electronic device 160 may store an image captured by the portable electronic device 160, such as a picture of the billboard 130 across the street from the user 100. The contextual cue may be a portion of contextual information stored in a continuously updated buffer memory, which provides some contextual information just prior to receiving the user input. Otherwise, the contextual cue may be generated after receiving and/or during the user input. Other examples of contextual cues are described in further embodiments in this disclosure.

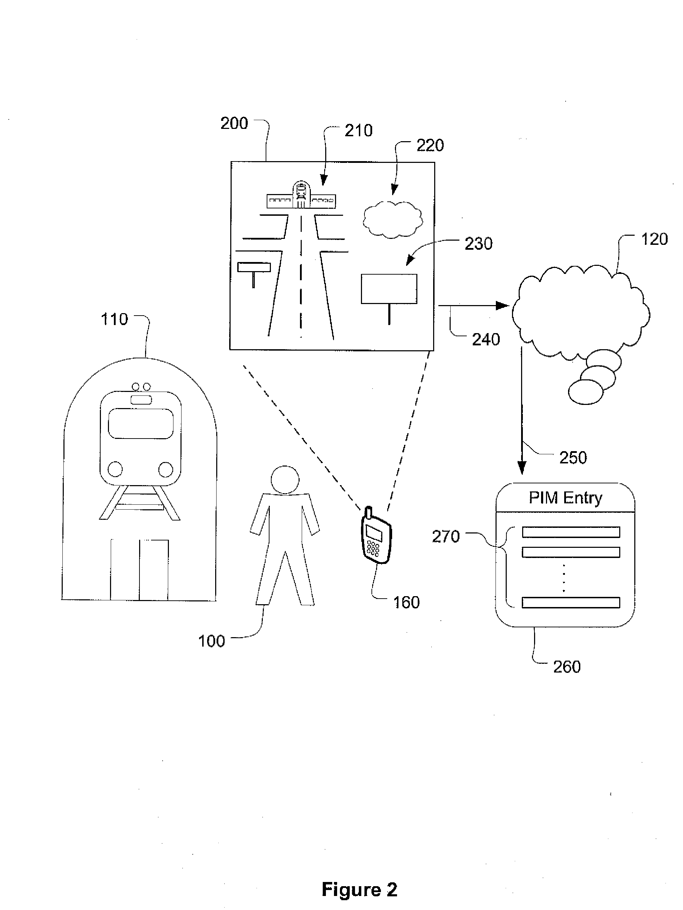

**Figure 2** continues the example scenario described in Figure 1. In Figure 2, the user 100 has arrived at the train station 110, and has an opportunity to enter the information, but the user 100 may have forgotten that he needed to enter the information. At some point, the portable electronic device 160 detects a trigger. In this disclosure, a trigger may be any stimulation, event, activity, or condition of a portable electronic device which may be used to initiate a process in the portable electronic device. There are several triggers which are described in this disclosure as non-limiting examples. For example, a trigger may be a change in movement of the portable electronic device, the expiration of a timer, activation of an application, or any condition which may initiate a process.

In this example, the trigger is a change in movement of the portable electronic device 160. The user 100 is standing at a waiting position at the train station 110 and therefore the portable electronic device 160 may detect a decrease in jostling measured by a sensor such as an accelerometer in the device. Alternatively, the trigger may be associated with a location detection, detecting that the user 100 has been in proximity with the train station for a preconfigured period of time. In another example, the trigger might be detection using a holster detector in the portable electronic device 160, where the portable electronic device 160 detects that it has been removed from the holster subsequent to being holstered after the earlier user input.

In response to the portable electronic device 160 detecting the trigger, the portable electronic device 160 presents a prompt, represented by prompt 200 in Figure 2, configured to facilitate remembrance (i.e., jogging the user's memory regarding the user's thought(s) at or about the time of the user input) and entry of the information. In the example scenario described in Figure 2, the prompt 200 may include contextual cues, such as location information 210, contextual information 220 about recent activity prior to receiving the input, or a representation of the nearby billboard 230. In the scenario where the user 100 was engaged in a phone call prior to the user input, the portable electronic device 160 may also present the phone number or recorded portion of the conversation associated with the phone call, which reminds the user 100 of the portable electronic device 160 that he or she wishes to create an email to the contact associated with the phone number. The prompt 200 facilitates entry of the information by reminding (represented by arrow 240) the user 100 regarding the thought about the information 120 and, thereby provoking the user to enter information (represented by arrow 250). In Figure 2, the user enters the information 250 as a new PIM record 260, including information elements 270. For example, the new PIM record 260 may be a contact PIM record and one of the information elements 270 may be the phone number associated with the phone call in the example scenario.

It should be understood that entry of information does not necessarily involve the creation of a new PIM record, and does not necessarily involve significant manual entry of information. For example, entry of information may be operations such as updating a PIM record, sending a message, accessing a website identified by the information (such as the information being a Uniform Resource Location indicator, URL). Additionally, entry of information may involve confirmation of a prompt which contains contextual information, thereby eliminating some of the manual entry of the information. For example, entry of the information may involve a review and validation of pre-populated data, which may be related to or included in the contextual information, that is prepared by the portable electronic device.

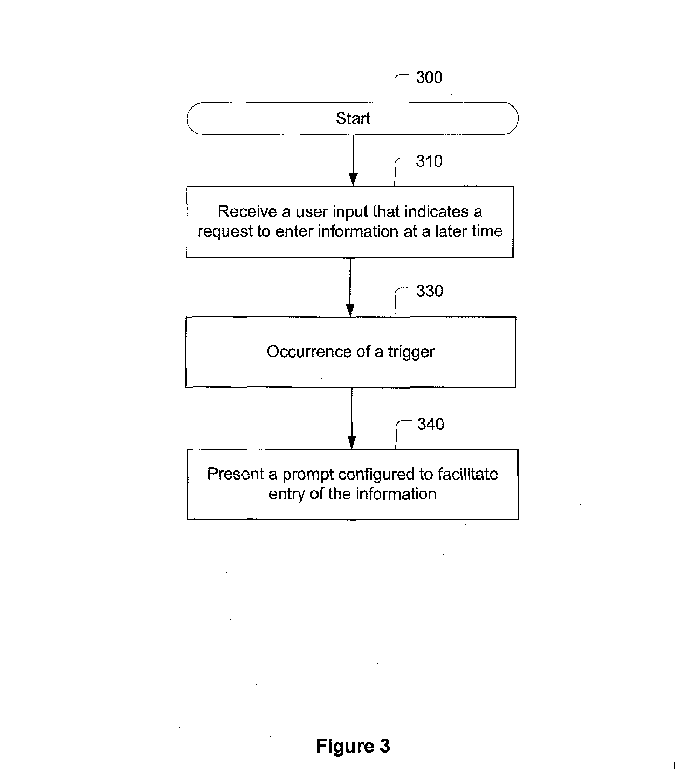

**Figure 3** is a flowchart illustrating an example method of presenting a prompt in accordance with an embodiment described in the present disclosure. At an early stage indicated by block 300 of the method, a portable electronic device receives a user input that indicates a request to enter information at a later time, represented by block 310. The user input is any input which may be associated with a request to enter information at a later time and that may be identified by the portable electronic device to indicate this request. For example, the user input may be a dedicated button, a combination of key presses in a keyboard, various taps on a touch screen, a gesture on a touch screen, specific movements detected by a accelerometer (e.g. shake in a specific way), taking a picture in a specific or unique way, or any other user input which can be associated with a request to enter information at a later time. In at least one embodiment, different user inputs might be associated with different types of prompts. For example, two taps on a touch screen might indicate a request to enter information regarding a task, while three taps on the touch screen might indicate a request to enter information regarding a calendar event.

A user input may not necessarily be received from a traditional input portion of the portable electronic device. For example, a portable electronic device may be equipped with an accelerometer, auditory input, or vibration detector capable of sensing or otherwise detecting user input to the portable electronic device. For example, the portable electronic device may be in a holster, but still able to detect user input on the portable electronic device. A vibration detector may detect user input comprising taps on the housing/casing of the portable electronic device. An accelerometer may detect a shaking of the portable electronic device, the shaking being indicative of a user input. A person of skill in the relevant arts will recognize that other ways of interacting with the portable electronic device may be configured to represent a user input for purposes of this disclosure.

In some embodiments, the user input may further indicate that entry of the information involves interaction with an input portion of the portable electronic device for more than a period of time. For example, the user input might be used when entry of the information involves interaction with an input portion of the portable electronic device for more than 30 seconds. The period of time may be configurable by the user, or may be determined heuristically or empirically based on a survey of representative users. For some users, the period of time may be more or less than 30 seconds, depending on the users' perception of time required to perform entry of information and for the perceived time. In other embodiments, the user input may further indicate a temporary lack of time to enter the information, regardless of the time associated with entry of the information.

Returning to Figure 3, there is an occurrence of a trigger at block 330. As stated previously, a trigger may be any stimulation, event, activity, or condition of a portable electronic device which may be used to initiate a process in the portable electronic device. As further examples, the trigger might be detection that the portable electronic device has stopped moving (e.g., being at a steady state of velocity), an expiration of a predetermined time after the user input, detection that an application has been activated in the portable electronic device, detection of a holster (such as an electromagnet detector or a short range wireless interface with a holster), a change in presence data, a detection of proximity based on a short range wireless broadcast signal, or a change in movement of the portable electronic device. One example trigger might occur when the portable electronic device determines that the portable electronic device is near a predetermined location (such as an office, home, or car) based on location or proximity information. Another example trigger might occur when there is an increase or decrease in movement as measured by an accelerometer in the portable electronic device or by a change in satellite or cellular location measurements.

In an example, a trigger might be associated with a condition on the portable electronic device. For example, a trigger may occur when the portable electronic device identifies a condition associated with activity on the portable electronic device. Alternatively, if the portable electronic device identifies a decrease in the amount of interaction with the portable electronic device, the portable electronic device may determine a condition, such as an idle condition following a user interaction. In one example implementation, the trigger may be associated with a "time wasting activity" condition of the portable electronic device. For example, the portable electronic device may have a trigger associated with the activation/initiation of a gaming application, or any application or class of applications. Alternatively, the portable electronic device may have a trigger associated with a change (increase or decrease) in activity associated with any application or class of applications.

In another example, a trigger might be associated with a proximity to a tag or radio frequency signal. For example, the trigger may occur when the device detects a short range radio frequency identification (RFID) signal, such as a RFID tag, smart tag, or other short range radio frequency signal. In one implementation, a holster may include a radio frequency tag and the portable electronic device may detect proximity to the radio frequency tag. A trigger may be associated with detecting a radio frequency signal at a specific location, such as home or office.

At block 340, the portable electronic device presents prompt configured to facilitate entry of the information. For example, the prompt may comprise a visual prompt, audible prompt, or tactile prompt, or any prompt which stimulates the user in a way to cause remembrance to enter the information. As described in Figure 2, the prompt may include presentation of a contextual cue to facilitate entry of the information. However, a prompt may be sufficient, without presentation of a contextual cue, to facilitate entry of the information. For example, if the user input of two taps on the touch screen indicates a request to enter a task, the trigger might occur when a task application is activated on the portable electronic device, and the prompt might comprise a new task entry opening automatically - which causes remembrance to enter information regarding the remembered task.

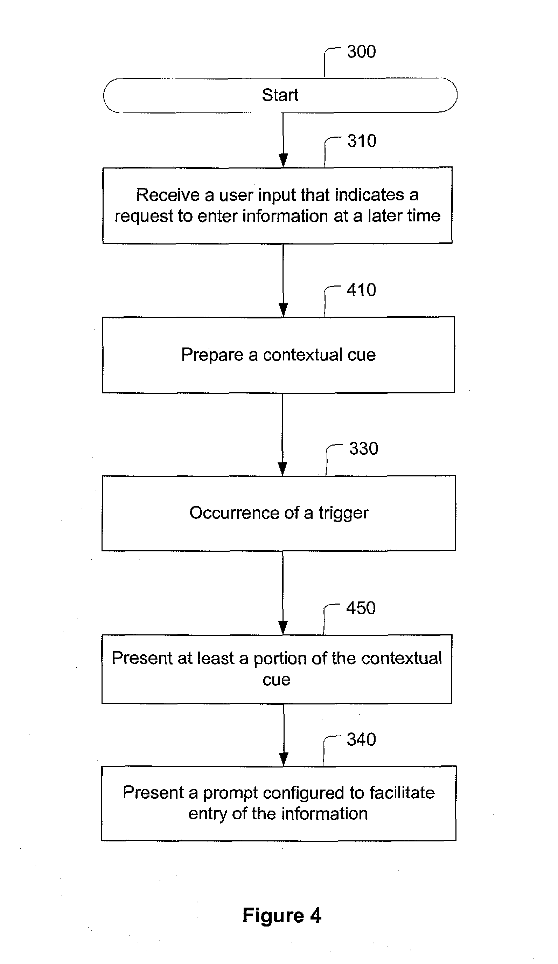

**Figure 4** is a flowchart illustrating an example method of presenting a prompt along with at least a portion of a contextual cue. At block 310, the portable electronic device receives a user input that indicates a request to enter information at a later time. In response to the user input, the portable electronic device prepares a contextual cue at block 410. A contextual cue may also be called a clue, circumstance, situation, environmental cue, informative reminder, or any other term meant to indicate a set of circumstances occurring any one or more of before, during, and after the time that the user input is received. A very simple contextual cue may be as simple as a time stamp generated at the time of receiving the user input. However, as provided in this disclosure, there are several non-limiting examples of contextual cues which might be used in accordance with this disclosure.

For example the contextual cue might be related to an activity performed just before the user input, such as viewing a PIM record, engaging in a verbal or electronic communication, or accessing a particular application. If the contextual cue is associated with a PIM record, the contents of the PIM record may be used to generate the contextual cue. If the activity performed just prior to the user input was a phone call, the contextual cue may comprise contextual information about the call - such as a phone number, name of the caller, duration of the call, participants in the call, a machine generated description of the call, or any other context information which might be associated with a phone call.

In other examples, the contextual cue may involve environmental factors, such as smells, descriptions of smells, images from a camera portion of the portable electronic device, physical location, or proximal relationship to a location. Contextual information may be analyzed or processed in a way to generate additional contextual information for use in the contextual cue. For example, contextual information may include an image of a person taken from the camera just after the user input, wherein the image might be processed (e.g., using facial recognition or reconciling the image with other images stored relative to PIM contact entries) to obtain the name of the person. In this example, the image and the name may be used separately or together in generating the contextual cue. Image processing might also be used to obtain optical character recognition, OCR, written representations of an image captured by the camera portion of the portable electronic device.

Another example of a contextual cue is a list of nearby devices discovered in temporal proximity to the user input. The portable electronic device may detect for signatures in broadcast signals (such as short range radio frequency signals) received around the time of the user input. The signatures of the detected broadcast signals might be stored as part of the contextual cue, or they may be used to obtain additional contextual information. For example, detection of several BlueTooth^{™} devices might be used to obtain a listing of nearby contacts for use as a contextual cue. If the portable electronic device has access to a location service via a network, it may be able to obtain a listing of other portable electronic devices that arc in the nearby area without engaging the short range radio interface of the portable electronic device.

In another example, the portable electronic device may prepare the contextual cue from audio contextual information. The audio contextual information may be from a continuously buffered recording of audio or may be created as a one time audio clip from a file or microphone input of the portable electronic device. The audio contextual information may include a brief time (such as 5 or 10 seconds) prior to the user input, or may include audio information for a brief time following the user input. In some implementations, the audio contextual information may be processed to generate a textual representation, such as a speech-to-text conversion or a machine generated description about the audio.

Preparation of the contextual cue may involve retrieving information from a first portion of a memory in the portable electronic device, generating the contextual cue from the information, storing the contextual cue into a second portion of the memory. Alternatively, preparation of the contextual cue may involve obtaining information via a network and storing the contextual cue into a portion of the memory in the portable electronic device. For example, the portable electronic device may determine location of the portable electronic device associated with receiving the user input and perform an internet query to determine a "reverse geo-coded" description of the location. The description of the location might describe an address, intersection, business name, house owner, or any other description that might indicate details about the location. In yet other situations, preparation of the contextual cue may involve processing contextual information to generate the contextual cue.

Returning to Figure 4, there is an occurrence of a trigger at block 330. As described with respect to Figure 3, the trigger may be any stimulation, event, activity, or condition of a portable electronic device which may be used to initiate a process in the portable electronic device. At block 450, the portable electronic device presents at least a portion of the contextual cue. By presenting the portion or an entirety of the contextual cue, the portable electronic device stimulates the user to remember the contextual information at the time of the user input. This mental stimulation facilitates remembrance of the information which the user wished to enter at the later time. At block 340, the portable electronic device presents a prompt configured to facilitate entry of the information.

It should be understood that there are several ways that the portable electronic device might present the portion of the contextual cue. For example, the contextual cue may be presented along with the prompt. The contextual cue may be presentation of a visual, audible, or tactile stimulation provided either before or after the prompt is presented. Alternatively, the contextual cue may be presented as an action field allowing the user to choose whether to have the contextual cue presented. In an implementation, the contextual cue may be in the form of pre-populated information in the prompt allowing the user to remember the contextual information and validate the information in the prompt.

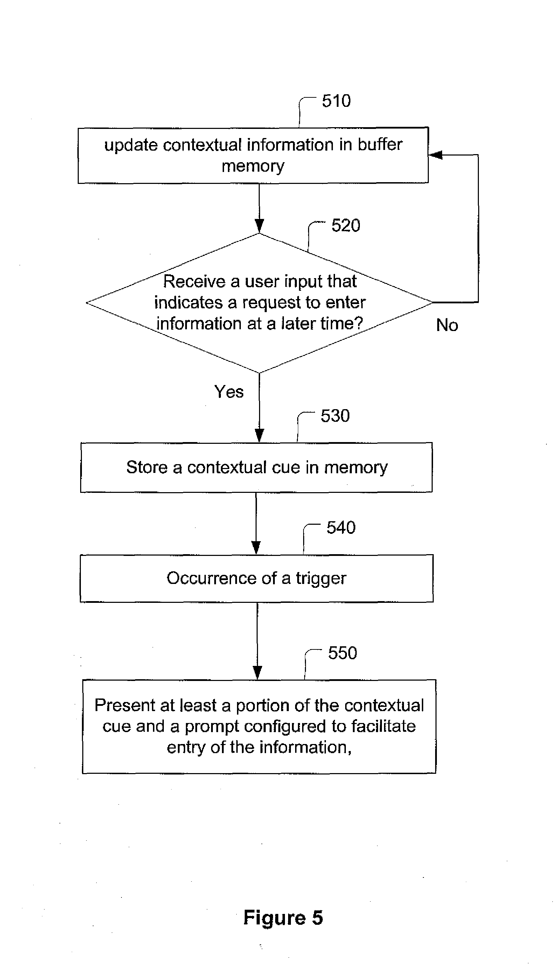

**Figure 5** is a flowchart illustrating a further example method involving contextual information. In Figure 5, the portable electronic device may have a buffer memory which stores a portion of contextual information that is regularly, periodically, randomly or continuously updated. For example, this might be an audio buffer which holds a brief period of time (5-30 seconds) of audio recording taken from the microphone of the portable electronic device. If the portable electronic device has voice of Internet protocol (VoIP) capabilities, the audio buffer may store packet data for a VoIP conversation on the portable electronic device. In another example, the buffer memory may have a video buffer taken from a camera portion of the portable electronic device and storing one or more images. The buffer memory may be associated with an electronic communication, such as an instant message, short message service (SMS), or interactive gaming session. Other types of buffer memory are known to a person of skill in the art. Typically a buffer memory holds a predetermined amount of data such that, when the buffer is full of data, the oldest data is removed making room for new data. Buffer memory may also be called a first-in-first-out buffer, circular buffer, temporary memory, or any other term known to a person of skill in the relevant art to describe a buffer memory.

At block 510, the portable electronic device updates contextual information in buffer memory. At decision block 520, the device may check if there it has received a user input that indicates a request to enter information at a later time. It should be understood that this checking portion (blocks 510 and 520) of the method may be implemented as a poll, subroutine, or scheduled process. In other implementations, the decision block 520 may be representative of an interrupt condition which occurs when the user input has been received. If the user input has not been received, the portable electronic device continuously updates contextual information in the buffer memory, at block 510. If the user input has been received, at block 530 the portable electronic device stores a contextual cue in a memory of the portable electronic device, the contextual cue based on the contextual information in the buffer memory. As described with respect to Figure 4, the contextual cue that is generated from the contextual information may comprise a portion, subset or entirety of the contextual information. However, the contextual cue may alternatively or additionally result from processing of the contextual information.

At block 540 there is an occurrence of a trigger, similar to the triggers described previously in this disclosure, including those of block 330. At block 550, the portable electronic device presents at least a portion of the contextual cue and the portable electronic device presents a prompt configured to facilitate entry of the information.

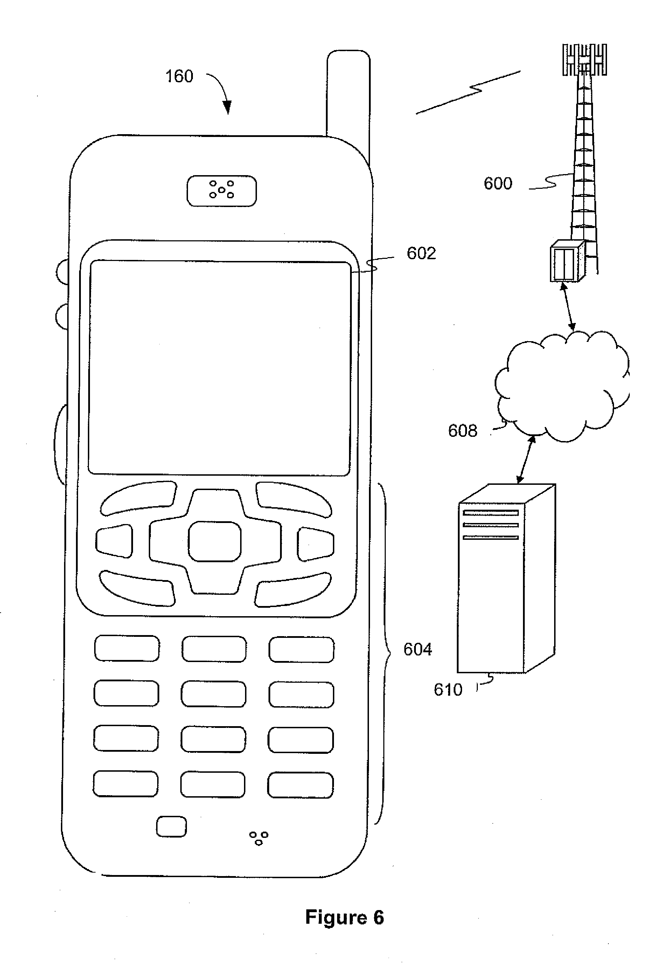

**Figure 6** illustrates an example wireless communications system including an embodiment of a portable electronic device in accordance with at least one of the embodiments described in the present disclosure. The portable electronic device 160 is operable for implementing aspects of the disclosure, but the disclosure should not be limited to these implementations. The portable electronic device 160 may be (or be a part of) a smart phone, wireless router, relay, laptop computer, tablet computer, GPS-enabled device, Navigation System, wireless mobile tracking device or any other device which may transmit information via a wireless network.

The portable electronic device 160 may include a user interface that includes a display 602 and a user input 604. The user input 604 of portable electronic device 160 may be or include a touch-sensitive surface, a keyboard or other input keys known in the art. The keyboard may be a full or reduced alphanumeric keyboard such as QWERTY, Dvorak, AZERTY, and sequential types, or a traditional numeric keypad with alphabet letters associated with a telephone keypad. The input keys may include a trackwheel, an exit or escape key, a trackball, and other navigational or functional keys, which may be inwardly depressed to provide further input function. The portable electronic device 160 may present options for the user to select, controls for the user to actuate, and/or cursors or other indicators for the user to direct.

The portable electronic device 160 may further accept data entry from the user, including numbers to dial or various parameter values for configuring the operation of the portable electronic device 160. The portable electronic device 160 may further execute one or more software or firmware applications in response to user commands. These applications may configure the portable electronic device 160 to perform various customized functions in response to user interaction. Additionally, the portable electronic device 160 may be programmed and/or configured over-the-air, for example from a wireless base station, a wireless access point, or a peer portable electronic device 160.

Among the various applications executable by the portable electronic device 160 is, for example, a PIM application for storing, retrieving and otherwise managing PIM records or information. Another application may be a web browser, which enables the display 602 to show a web page. The web page may be obtained via wireless communications with a wireless network access node, a cell tower, a peer portable electronic device 160, or any other wireless communication network or system 160. The network may be coupled to a wired network 608, such as the Internet. Via the wireless link and the wired network, the portable electronic device 160 can have access to information on various servers, such as a server 610. The server 610 may provide content that may be shown on the display 602. Alternately, the portable electronic device 160 may access the network 608 through a peer portable electronic device 160 acting as an intermediary, in a relay type or hop type of connection. A portable electronic device 160 may be operable to transmit over one or more of any suitable wireless networks 160 known in the art.

The portable electronic device 160 and other components described above may include a processing component that is capable of executing instructions related to the actions described above.

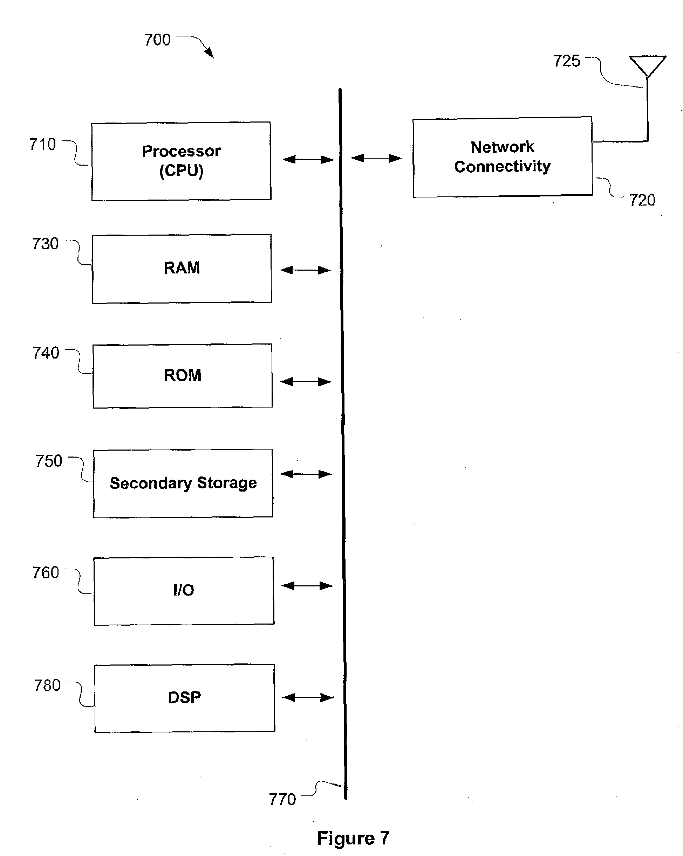

Figure 7 illustrates an example embodiment of an apparatus 700 that may be configured to operate as a device (e.g., mobile 160) which includes a processing component 710 suitable for implementing one or more of the embodiments earlier described herein. In addition to the processor 710 (which may be referred to as a central processor unit or CPU), the system 700 may include network connectivity devices 720, random access memory (RAM) 730, read only memory (ROM) 740, secondary storage 750, and input/output (I/O) devices 760. These components may communicate with one another via a bus 770. In some cases, some of these components may not be present or may be combined in various combinations with one another or with other components not shown. These components may be located in a single physical entity or in more than one physical entity. Any actions described herein as being taken by the processor 710 might be taken by the processor 710 alone or by the processor 710 in conjunction with one or more components shown or not shown in the drawing, such as a digital signal processor (DSP) 780. Although the DSP 780, is shown as a separate component, the DSP 780 may be incorporated into the processor 710.

The processor 710 executes instructions, logic, codes, computer programs, or scripts that it may access from the network connectivity devices 720, RAM 730, ROM 740, or secondary storage 750 (which might include various disk-based systems such as hard disk, floppy disk, or optical disk). In one embodiment, a computer readable medium may store computer readable instructions, which when executed by the processor 1210, cause the processor to perform according to a method described in this disclosure. While only one CPU 710 is shown, multiple processors may be present. Thus, while instructions may be discussed as being executed by a processor, the instructions may be executed simultaneously, serially, or otherwise by one or multiple processors. The processor 710 may, for example, be implemented as one or more CPU chips or modules. The processor 710 may also be integrated with other functions of portable electronic device 160 in or on a single chip or module.

The network connectivity devices 720 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-lrnown devices for connecting to networks. These network connectivity devices 720 may enable the processor 710 to communicate with the Internet or one or more telecommunications networks or other networks from which the processor 710 might receive information or to which the processor 710 might output information. The network connectivity devices 720 might also include one or more transceiver components 725 capable of transmitting and/or receiving data wirelessly.

The RAM 730 might be used to store volatile data and perhaps to store instructions that are executed by the processor 710. The ROM 740 is a non-volatile memory device that in some cases has a smaller memory capacity than the memory capacity of the secondary storage 750. ROM 740 might be used to store instructions and perhaps data that are read during execution of the instructions. Access to both RAM 730 and ROM 740 is typically faster than to secondary storage 750. The secondary storage 750 is typically comprised of one or more disk drives or tape drives and might be used for non-volatile storage of data or as an over-flow data storage device if RAM 730 is not large enough to hold all working data. However, the secondary storage 750 could be implemented using any appropriate storage technology, including so-called "solid state disk", FLASH, EEPROM, or other generally non-volatile or persistent storage. Secondary storage 750 may be used to store programs that are loaded into RAM 730 when such programs are selected for execution.

The I/O devices 760 may include liquid crystal displays (LCDs), touch screen displays, keyboards, keypads, switches, dials, mice, track balls, voice recognizers, card readers, paper tape readers, printers, video monitors, or other well-known input devices. Also, the transceiver 725 might be considered to be a component of the I/O devices 760 instead of or in addition to being a component of the network connectivity devices 720. Some or all of the I/O devices 760 may be substantially similar to various components depicted in the previously described drawing of the portable electronic device 160, such as the display 602 and the input 604.

The steps, processes, or operations described herein are examples. There may be many variations to these steps or operations without departing from the scope of this disclosure. For instance, where appropriate, the steps may be performed in a differing order, or steps may be added, deleted, or modified.

Although example embodiments of this disclosure have been depicted and described in detail herein, it will be apparent to those skilled in the relevant art that various modifications, additions, substitutions, and the like can be made without departing from the concepts and embodiments disclosed herein, and these are therefore considered to be within the scope of the present subject matter as defined in the following claims,

## Claims

1. A method performed by a portable electronic device, comprising:
receiving a user input that indicates a request to enter information at a later time; and
upon occurrence of a trigger at the later time, presenting a prompt configured to facilitate entry of the information.

2. The method of claim 1, wherein the user input further indicates that entry of the information involves interaction with an input portion of the portable electronic device for more than a period of time.

3. The method of claim 1 or 2, wherein the user input further indicates a temporary lack of time to enter the information.

4. The method of any preceding claim, wherein the trigger occurs a predetermined time after receiving the user input.

5. The method of any preceding claim, wherein the trigger occurs based on a change in movement of the portable electronic device.

6. The method of any preceding claim, wherein the trigger occurs when a PIM application associated with the prompt is activated.

7. The method of any preceding claim, wherein the information comprises a recorded remembrance regarding a thought occurring at the time of the user input.

8. The method of any preceding claim, wherein the information is associated with a task and the entry of the information comprises creating a reminder regarding the task.

9. The method of any preceding claim, wherein presenting the prompt comprises:
presenting a first type of prompt when the user input is a first input type; and
presenting a second type of prompt when the user input is a second input type.

10. The method of claim 9, wherein the first input type comprises a first gesture on an input portion of the portable electronic device, and the second input type comprises a second gesture on the input portion of the portable electronic device.

11. The method of any preceding claim, further comprising:
in response to receiving the user input, preparing a contextual cue; and
presenting at least a portion of the contextual cue with the prompt.

12. The method of claim 11, wherein the contextual cue is based on a recent previous activity performed on the portable electronic device prior to receiving the user input.

13. The method of claim 11 or 12, wherein the contextual cue is one of:
a short audio clip taken from a continuously recorded audio buffer in a memory of the portable electronic device;
a location of the portable electronic device;
a picture taken from a camera in the portable electronic device;
a list of nearby other portable electronic devices;
a phone number associated with a call on the portable electronic device; and
a calendar event coterminous with the user input.

14. A portable electronic device adapted to perform the method of any one of claims 1-13.

15. A computer readable medium, storing computer readable instructions, which when executed by a processor perform the method of any of claims 1-13.

## Amended claims

### Amended claims in accordance with Rule 137(2) EPC.

**1.** A method performed by a portable electronic device, comprising:
receiving a user input that indicates a request to enter information at a later time;
in response to receiving the user input, preparing a contextual cue; and
upon occurrence of a trigger at the later time, presenting at least a portion of the contextual cue along with a prompt configured to facilitate entry of the information.

**2.** The method of claim 1, wherein the user input further indicates that entry of the information involves interaction with an input portion of the portable electronic device for more than a period of time.

**3.** The method of claim 1 or 2, wherein the user input further indicates a temporary lack of time to enter the information.

**4.** The method of any preceding claim, wherein the trigger occurs a predetermined time after receiving the user input.

**5.** The method of any preceding claim, wherein the trigger occurs based on a change in movement of the portable electronic device.

**6.** The method of any preceding claim, wherein the trigger occurs when a PIM application associated with the prompt is activated.

**7.** The method of any preceding claim, wherein the information comprises a recorded remembrance regarding a thought occurring at the time of the user input.

**8.** The method of any preceding claim, wherein the information is associated with a task and the entry of the information comprises creating a reminder regarding the task.

**9.** The method of any preceding claim, wherein presenting the prompt comprises:
presenting a first type of prompt when the user input is a first input type; and
presenting a second type of prompt when the user input is a second input type.

**10.** The method of claim 9, wherein the first input type comprises a first gesture on an input portion of the portable electronic device, and the second input type comprises a second gesture on the input portion of the portable electronic device.

**11.** The method of any preceding claim, wherein
preparing the contextual cue comprises processing data stored in a memory of the portable electronic device to generate the contextual cue.

**12.** The method of any preceding claim, wherein the contextual cue is based on a recent previous activity performed on the portable electronic device prior to receiving the user input.

**13.** The method of any preceding claim, wherein the contextual cue is one of:
a short audio clip taken from a continuously recorded audio buffer in a memory of the portable electronic device;
a location of the portable electronic device;
a picture taken from a camera in the portable electronic device;
a list of nearby other portable electronic devices;
a phone number associated with a call on the portable electronic device; and
a calendar event coterminous with the user input.

**14.** A portable electronic device adapted to perform the method of any one of claims 1-13.

**15.** A computer readable medium, storing computer readable instructions, which when executed by a processor perform the method of any of claims 1-13.
